# EUROPEAN PATENT APPLICATION

(11) **EP 4 148 857 A1**
(43) Date of publication of application: **15.03.2023**
(21) Application number: 21883210.3
(22) Date of filing: 19.10.2021
(51) Int. Cl.: H01M 10/0583, H01M 10/04, H01M 10/052

(54) **METHOD FOR MANUFACTURING ELECTRODE ASSEMBLY AND ELECTROCHEMICAL DEVICE COMPRISING THE ELECTRODE ASSEMBLY**

(30) Priority: 19.10.2020 KR 20200135061
(71) Applicant: LG Energy Solution, Ltd., Seoul 07335 (KR)
(72) Inventor: SONG, Da-Noh, Daejeon 34122 (KR); PARK, Sung-Bin, Daejeon 34122 (KR)
(74) Representative: Goddar, Heinz J.
(86) International application number: PCT/KR2021/014629
(87) International publication number: WO 2022/086141

(57) **Abstract**

Disclosed is a method for manufacturing an electrode assembly, including at least one step selected from: a step of passing heat treated first separator and electrodes through a pair of surface-patterned rollers under pressurization to prepare a preliminary electrode assembly including the first separator laminated with the electrodes; and a step of passing a second separator on which the preliminary electrode assemblies are disposed through a pair of surface-patterned rollers under pressurization, and then carrying out winding in such a manner that the second separator may be interposed between the preliminary electrode assemblies. An electrochemical device including the electrode assembly is also disclosed.

## Description

### TECHNICAL FIELD

The present disclosure relates to a method for manufacturing an electrode assembly and an electrochemical device including the electrode assembly. Particularly, the present disclosure relates to a method for manufacturing an electrode assembly having improved electrolyte wetting and air permeability characteristics, and an electrochemical device including the electrode assembly and having improved battery performance.

The present application claims priority to Korean Patent Application No. 10-2020-0135061 filed on October 19, 2020 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Particularly, development of secondary batteries as compact, light-weight high-capacity rechargeable batteries has been focused, as electronic instruments have been downsized and provided with a light weight recently.

In addition, secondary batteries may be classified depending on the structure of an electrode assembly including a positive electrode, a separator and a negative electrode. Typically, electrode assemblies are classified into jelly-roll (wound) electrode assemblies formed by winding elongated sheet-like positive electrodes and negative electrodes with separators interposed between both electrodes, and stacked (laminated) electrode assemblies formed by successively stacking a plurality of positive electrodes and negative electrodes cut into units having a predetermined size with separators interposed between both electrodes.

However, such electrode assemblies according to the related art have several problems.

First, the jelly-roll electrode assembly is obtained by winding an elongated sheet-like positive electrode and negative electrode in a compact state to form a cylindrical or oval structure as viewed from the section. Thus, the stress caused by the swelling and shrinking of an electrode is accumulated inside of the electrode assembly, and the electrode assembly is deformed, when such stress accumulation exceeds a certain limit. Such deformation of the electrode assembly results in the problems in that the interval between electrodes becomes non-uniform to cause rapid degradation of battery performance, and battery safety is affected adversely due to an internal short-circuit. In addition, although the elongated sheet-like positive electrode and negative electrode should be wound, it is difficult to wind the positive electrode and negative electrode promptly, while maintaining a constant interval between the positive electrode and the negative electrode, resulting in degradation of productivity.

Second, a stacked electrode assembly requires successive stacking of a plurality of positive electrodes and negative electrodes. Therefore, a separate step of transferring an electrode plate for forming a unit body is required, and the successive stacking process requires a lot of time and labor to cause the problem of low productivity.

To solve the above-mentioned problems, a stack-folded electrode assembly has been developed as an electrode assembly having an advanced structure which is a combined jelly-roll and stacked structure. The stack-folded electrode assembly is obtained by stacking a predetermined number of positive electrode and negative electrode units with separators interposed between both electrodes to form bi-cells or full cells, and winding the bi-cells or full cells by using a continuous separator sheet having a large length.

When manufacturing such a stack-folded electrode assembly, the conventional lamination technology is used to adhere the whole interface between the electrode and the separator under high-temperature pressing. For this, the temperature and pressure are controlled in order to accomplish a specific level of adhesion, and physical impact is applied to the electrodes and the separator.

Since the separator shows an increase air permeation time due to such high-temperature pressing, the resistance is increased so that the cell performance may be affected adversely, and the dielectric breakdown voltage of the separator is reduced to cause a safety issue.

In addition, due to the interfacial adhesion between the electrode and the separator, electrolyte wetting characteristics are degraded, which affects output characteristics undesirably.

### DISCLOSURE

### Technical Problem

The present disclosure is designed to solve the problems of the related art, and therefore the present disclosure is directed to providing a method for manufacturing an electrode assembly which improves the problems caused by the interfacial adhesion between an electrode and a separator, and an electrochemical device including the electrode assembly.

### Technical Solution

In one aspect of the present disclosure, there are provided a method for manufacturing an electrode assembly and an electrochemical device including the electrode assembly according to the following embodiments.

According to the first embodiment, there is provided a method for manufacturing an electrode assembly, including the steps of:
heat treating a plurality of electrodes and a first separator interposed between the electrodes;
passing the heat treated first separator and electrodes through a pair of surface-patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
carrying out winding in such a manner that the second separator may be interposed between the preliminary electrode assemblies.

According to the second embodiment, there is provided a method for manufacturing an electrode assembly, including the steps of:
heat treating a plurality of electrodes and a first separator interposed between the electrodes;
passing the heat treated first separator and electrodes through a pair of non-surface patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
passing the second separator on which the preliminary electrode assemblies are disposed through a pair of surface-patterned rollers under pressurization, and then carrying out winding in such a manner that the second separator may be interposed between the preliminary electrode assemblies.

According to the third embodiment of the present disclosure, there is provided a method for manufacturing an electrode assembly, including the steps of:
heat treating a plurality of electrodes and a first separator interposed between the electrodes;
passing the heat treated first separator and electrodes through a pair of surface-patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
passing the second separator on which the preliminary electrode assemblies are disposed through a pair of surface-patterned rollers under pressurization, and then carrying out winding in such a manner that the second separator may be interposed between the preliminary electrode assemblies.

According to the fourth embodiment, there is provided the method for manufacturing an electrode assembly as defined in any one of the first to the third embodiments, wherein the surface-patterned rollers are formed by carving a pattern on the roller surfaces, or by attaching a pattern sheet to the roller surfaces.

According to the fifth embodiment, there is provided the method for manufacturing an electrode assembly as defined in any one of the first to the third embodiments, wherein the pattern includes a hexagonal pattern, a quadrangular pattern, a triangular pattern, a circular type, a pentagonal pattern, a linear pattern, a diagonal pattern, a polygonal pattern, or two or more of them.

According to the sixth embodiment, there is provided the method for manufacturing an electrode assembly as defined in any one of the first to the third embodiments, wherein the area of the pattern directly facing the electrode is 1-99% based on the total surface area of the surface-patterned roller.

According to the seventh embodiment, there is provided an electrode assembly obtained by the method as defined in any one of the first to the third embodiments.

According to the eighth embodiment, there is provided an electrochemical device including the electrode assembly as defined in the seventh embodiment, received in a casing.

According to the ninth embodiment, there is provided the electrochemical device as defined in the eighth embodiment, which is a lithium secondary battery.

### Advantageous Effects

According to an embodiment of the present disclosure, when using surface-patterned pressing rollers during a step of pressing (laminating) electrodes and a separator, it is possible to reduce the contact area directly facing the electrodes, or the like, upon the pressing so that the lamination load may be reduced, and thus to apply adhesion with minimized stimulation.

As a result, the problems caused by the interfacial adhesion between an electrode and a separator are solved by a technology of the conventional lamination technology combined with patterning. Therefore, it is possible to provide an electrode assembly having improved electrolyte wetting and air permeability characteristics, and an electrochemical device having improved battery performance.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic view illustrating the surface-patterned roller according to an embodiment of the present disclosure.
FIG. 2 to FIG. 4 illustrate patterns carved directly on the surface of a roller in various shapes.
FIG. 5 illustrates a process for preparing a preliminary electrode assembly including a first separator laminated with a plurality of electrodes according to an embodiment of the present disclosure.
FIG. 6a illustrates the conventional press roller.
FIG. 6b illustrates a process for preparing a preliminary electrode assembly by using the conventional press roller.
FIG. 7 illustrates the preliminary electrode assembly obtained by using a pair of surface-patterned rollers according to an embodiment of the present disclosure.
FIG. 8 illustrates the preliminary electrode assembly obtained by using the conventional non-patterned roller.
FIG. 9 and FIG. 10 illustrate a process of passing the second separator on which the preliminary electrode assemblies are disposed through a pair of surface-patterned rollers under pressurization.
FIG. 11 is a schematic sectional view illustrating an embodiment of electrode assembly according to the related art.
FIG. 12 is a schematic sectional view illustrating another embodiment of electrode assembly according to the related art.
FIG. 13 is a schematic sectional view illustrating still another embodiment of electrode assembly according to the related art.
FIG. 14 is a schematic sectional view illustrating the stack-folded electrode assembly structure provided with unit cells according to the related art.
FIG. 15 is a schematic sectional view illustrating the stack-folded electrode assembly structure provided with bi-cells according to the related art.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The present disclosure is directed to solving the problems occurring in the methods for manufacturing a stack-folded electrode assembly according to the related art and relates to an improved method for manufacturing an electrode assembly. Particularly, the present disclosure relates to an improved method for manufacturing a stack-folded electrode assembly, and an electrochemical device including the electrode assembly obtained from the method.

Hereinafter, the method for manufacturing a stack-folded electrode assembly according to the related art will be explained.

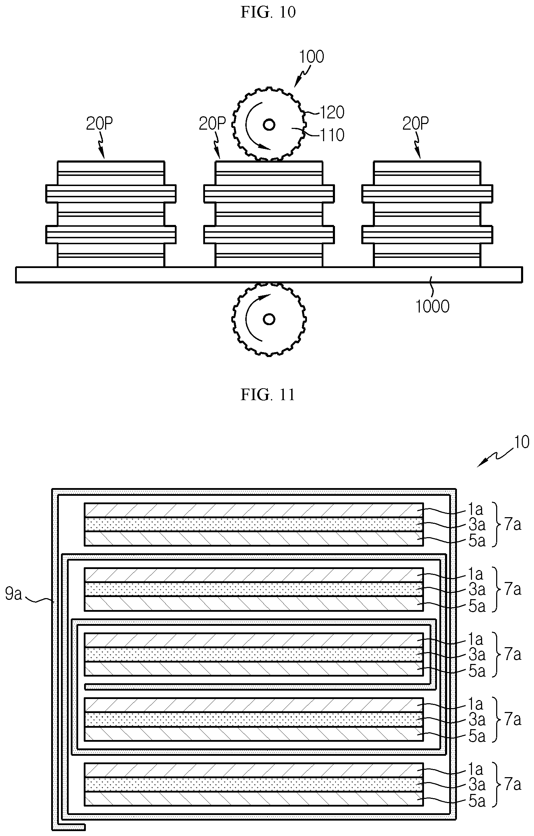

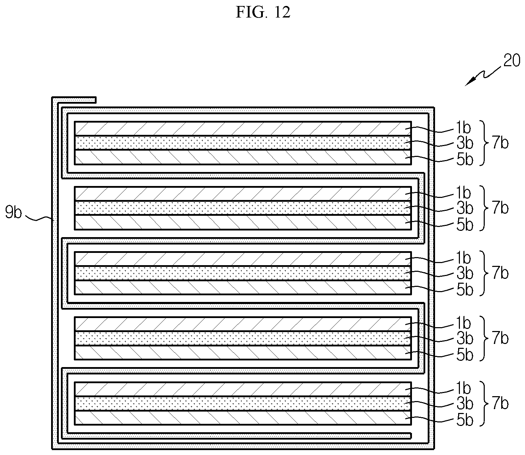

FIG. 11 to FIG. 13 are schematic sectional views illustrating the structure of a stack-folded electrode assembly. In the drawings, the same numeral means the same member.

Referring to FIG. 11 to FIG. 13, the electrode assembly 10, 20, 30 includes a first separator 3a, 3b, 3c, and a plurality of unit cells 7a, 7b, 7c1, 7c2, each including a negative electrode 1a, 1b, 1c and a positive electrode 5a, 5b, 5c disposed at both sides of the first separator 3a, 3b, 3c. The positive electrode 5a, 5b, 5c includes positive electrode active material layers formed on both surfaces of a positive electrode current collector, and the negative electrode 1a, 1b, 1c includes negative electrode active material layers formed on both surfaces of a negative electrode current collector. As shown in FIG. 11 to FIG. 13, the unit cell may include unit cells having various structures, such as a full-cell 7a, 7b in which one positive electrode 5a, 5b and one negative electrode 1a, 1b are disposed at both sides of the first separator 3a, 3b, and a bi-cell 7c1, 7c2 (positive electrode/separator/negative electrode/separator/positive electrode structure or negative electrode/separator/positive electrode/separator/negative electrode structure) in which the first separator 3c is disposed on each of both surfaces of the positive electrode 5c or negative electrode 1c and the negative electrode 1c or positive electrode 5c is disposed on the first separator 3c. In addition, the positive electrode/separator/negative electrode/separator/positive electrode structure 7c1 or the negative electrode/separator/ positive electrode/separator/negative electrode structure 7c2 may be expressed collectively as a bi-cell, and the positive electrode/separator/negative electrode 7a, 7b, 7c may be expressed collectively as a mono-cell.

In the electrode assembly 10, 20, 30, each of the unit cells 7a, 7b, 7c1, 7c2 is present in the form of a stack. Herein, a continuous single second separator 9a, 9b, 9c disposed to surround each of the unit cells 7a, 7b, 7c1, 7c2 is interposed between the adjacent unit cells 7a, 7b, 7c1, 7c2 facing each other in various forms as shown in FIG. 11 to FIG. 13 so that it may function as a separator between the unit cells 7a, 7b, 7c 1, 7c2.

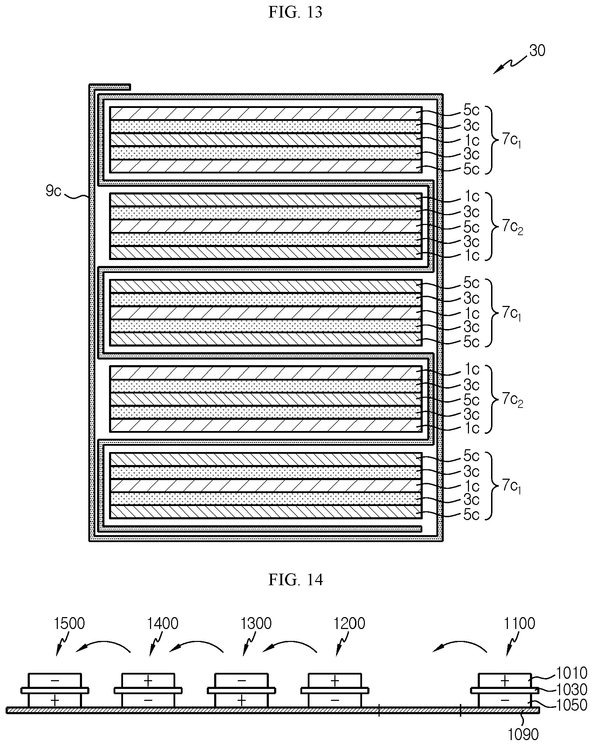

FIG. 14 shows an embodiment of the structure for manufacturing a stack-folded electrode assembly according to the related art. The structure for manufacturing a stack-folded electrode assembly as shown in FIG. 14 uses a unit cell including a first separator, and a positive electrode and a negative electrode disposed at both sides of the first separator, wherein unit cells 1100, 1200, 1300, 1400, 1500 are disposed on one surface of a second separator 1090 with a predetermined interval.

In addition, in a process for manufacturing an electrode assembly, the electrode assembly is subjected to a pressing step, after forming the electrode assembly.

According to another embodiment of the present disclosure, in the structure for manufacturing a stack-folded electrode assembly, a bi-cell (positive electrode/separator/ negative electrode/separator/positive electrode structure or negative electrode/separator/ positive electrode/separator/negative electrode structure), in which the first separator is disposed on each of both surfaces of the positive electrode or negative electrode and the negative electrode or positive electrode is disposed on the first separator, may be used, instead of the unit cell.

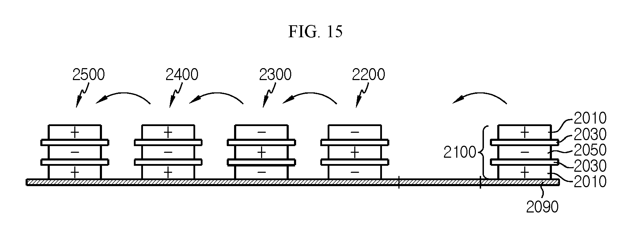

FIG. 15 is a schematic view illustrating the structure for manufacturing a stack-folded electrode assembly using a bi-cell. Th bi-cells 2100, 2200, 2300, 2400, 2500 are disposed on one surface of a second separator 2090 with a predetermined interval. The bi-cells 2100, 2200, 2300, 2400, 2500 may have a structure of positive electrode 2010/first separator 2030/negative electrode 2050/first separator 2030/positive electrode 2010 structure or a structure of negative electrode 2050/first separator 2030/positive electrode 2010/first separator 2030/negative electrode structure 2050. When using the bi-cells 2100, 2200, 2300, 2400, 2500, it is preferred to dispose a bi-cell with a structure of positive electrode 2010/first separator 2030/negative electrode 2050/first separator 2030/positive electrode 2010 structure and a bi-cell with a structure of negative electrode 2050/first separator 2030/positive electrode 2010/first separator 2030/negative electrode structure 2050 suitably in such a manner that the positive electrode meets the negative electrode on the surface where one bi-cell faces another bi-cell upon the winding, as shown in FIG. 11 to FIG. 13.

Once the electrode assembly is prepared as described above, a stack-folding process is used to manufacture an electrode assembly from the structure, as shown in FIG. 11 to FIG. 13. Particularly, the structure is folded in such a direction that the second separator may surround the unit cells or bi-cells, and the unit cells or bi-cells may be aligned correspondingly with one another in the stack.

In FIG. 14 and FIG. 15, the folding direction used for manufacturing the electrode assembly as shown in FIG. 11 from the structure according to the present disclosure is represented by an arrow mark and the folding point is represented by a dotted line.

As shown in the drawings, when the structure is folded from the right end, there is a zone in which no unit cell or bi-cell is disposed approximately by the width of one unit cell 1100 or bi-cell 2100 in such a manner that the electrode 1010, 2010 positioned at the top end of the unit cell 1100 or bi-cell 2100 may be in contact with the separator 1090, 2090.

Then, folding is carried out continuously at the point represented by the dotted line in the direction of the arrow mark, the unit cells 1100, 1200, 1300, 1400, 1500 or bi-cells 2100, 2200, 2300, 2400, 2500 are totally surrounded with the second separator 1090, 2090, the second separator 1090, 2090 is interposed between the adjacent unit cells or bi-cells, and the unit cells or bi-cells have a structure in which they are aligned correspondingly with one another in the stack (stack-folding). However, in order to carry out the stack-folding process, the interval in the unit cells 1200, 1300, 1400, 1500 and bi-cells 2200, 2300, 2400, 2500, after the first unit cell 1100 and bi-cell 2100 as shown in FIG. 14 and FIG. 15, corresponds to the height of the preliminarily stacked cells in each unit cell or bi-cell, and thus is increased gradually as known to those skilled in the art. However, it is to be noted that a uniform interval is shown for the convenience of presentation in FIG. 14, and FIG. 15.

When manufacturing an electrode assembly, particularly, a stack-folded electrode assembly, the whole interface between an electrode and a separator is adhered by high-temperature pressing, and thus the separator shows an increased air permeation time due to the high-temperature pressing, resulting in an increase in resistance, thereby affecting the performance of a cell. In addition, the separator shows a reduced dielectric breakdown voltage to cause a safety issue. Further, electrolyte wetting characteristics are degraded due to the interfacial adhesion between the electrode and the separator, which affects output characteristics undesirably.

The improved method for manufacturing an electrode assembly according to the present disclosure uses a pair of surface-patterned rollers in the pressing step during the manufacture of an electrode assembly to solve the above-mentioned problems.

The method for manufacturing an electrode assembly according to the present disclosure includes least one step selected from: a step of passing heat treated first separator and electrodes through a pair of surface-patterned rollers under pressurization to prepare a preliminary electrode assembly including the first separator laminated with the electrodes; and a step of passing a second separator on which the preliminary electrode assemblies are disposed through a pair of surface-patterned rollers under pressurization, and then carrying out winding in such a manner that the second separator may be interposed between the preliminary electrode assemblies.

According to an embodiment of the present disclosure, there is provided a method which includes carrying out pressurization by using a pair of surface-patterned rollers only to prepare a preliminary electrode assembly.

Particularly, there is provided a method for manufacturing an electrode assembly, including the steps of:
heat treating a plurality of electrodes and a first separator interposed between the electrodes;
passing the heat treated first separator and electrodes through a pair of surface-patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
carrying out winding in such a manner that the second separator may be interposed between the preliminary electrode assemblies.

According to another embodiment of the present disclosure, there is provided a method which includes carrying out pressurization by using a pair of surface-patterned rollers only to pressurize a second separator on which a plurality of preliminary electrode assemblies is disposed.

Particularly, there is provided a method for manufacturing an electrode assembly, including the steps of:
heat treating a plurality of electrodes and a first separator interposed between the electrodes;
passing the heat treated first separator and electrodes through a pair of non-surface patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
passing the second separator on which the preliminary electrode assemblies are disposed through a pair of surface-patterned rollers under pressurization, and then carrying out winding in such a manner that the second separator may be interposed between the preliminary electrode assemblies.

According to still another embodiment of the present disclosure, there is provided a method which includes carrying out pressurization by using a pair of surface-patterned rollers not only to prepare a preliminary electrode assembly but also to pressurize the second separator on which a plurality of preliminary electrode assemblies is disposed.

Particularly, there is provided a method for manufacturing an electrode assembly, including the steps of:
heat treating a plurality of electrodes and a first separator interposed between the electrodes;
passing the heat treated first separator and electrodes through a pair of surface-patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
passing the second separator on which the preliminary electrode assemblies are disposed through a pair of surface-patterned rollers under pressurization, and then carrying out winding in such a manner that the second separator may be interposed between the preliminary electrode assemblies.

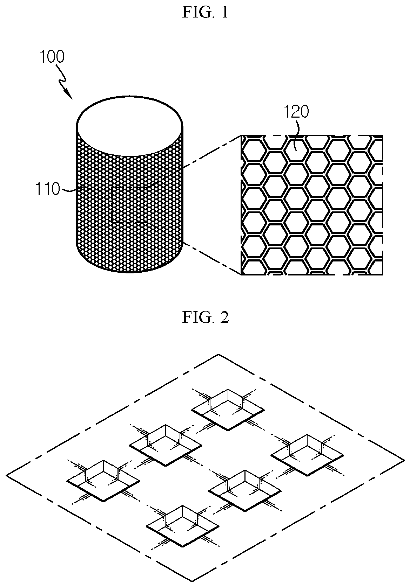

FIG. 1 illustrates the surface-patterned roller according to an embodiment of the present disclosure.

Referring to FIG. 1, the surface-patterned roller 100 may be formed by carving a pattern 120 directly on the surface of a roller main body 110, or by attaching a separate pattern sheet to the roller surface. The method for carving a pattern on the roller surface may be carried out in intaglio by engraving a portion having a desired pattern shape, or in relief by embossing a portion having a desired pattern shape.

FIG. 2 to FIG. 4 illustrate patterns carved directly on the surface of a roller in various shapes.

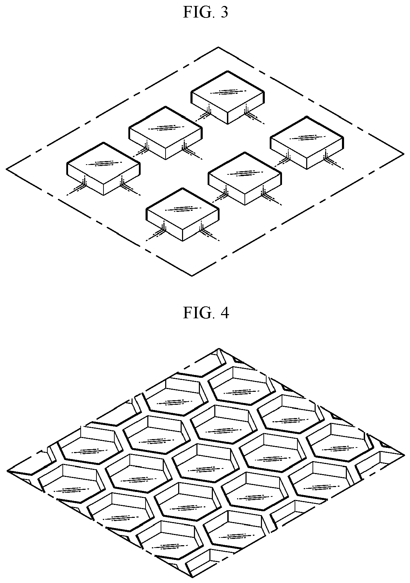

In FIG. 2, a quadrangular pattern is formed by intaglio. In FIG. 3, a quadrangular pattern is formed by embossing.

In FIG. 4, a honeycomb structured pattern is shown, wherein only the edge portion is left as a pattern side from a hexagonal shape, while the remaining portion is removed by intaglio.

In addition, it is possible to prepare a surface-patterned roller according to an embodiment of the present disclosure by attaching a separate pattern sheet (pattern member) having a desired pattern shape to the surface of a roller.

The surface-patterned roller according to an embodiment of the present disclosure shows a reduced contact area with an electrode and/or a separator that faces the roller, as compared to the conventional roller having a non-patterned surface, i.e. a roller having a flat surface with no surface irregularities, and thus can reduce the pressing (lamination) load of an electrode assembly, resulting in a decrease in physical stimulation applied to the separator and the electrode. It is possible to control the contact area, where the roller directly faces the electrode, or the like, and contact area distribution freely by controlling the pattern shape formed on the shape and surface exposure area.

When the surface-patterned roller is in contact with the electrode which it faces, or the like, during a lamination process, the portion (surface portion removed by intaglio or embossing, original roller surface to which no pattern sheet is attached, or the like) that is not in direct contact with the electrode due to the pattern formation may reduce the lamination load, and thus may reduce the physical stimulation applied to the electrode and the separator.

The pattern formed on the roller may have a hexagonal pattern, a quadrangular pattern, a triangular pattern, a circular pattern, a pentagonal pattern, a linear pattern, a diagonal pattern, a polygonal pattern, or a combination of two or more of them. According to an embodiment of the present disclosure, when using a roller surface-patterned with a honeycomb structure, it is possible to maximize the adhesion effect through the minimized adhesion area by virtue of the most stable structure. Therefore, it is possible to further improve the air permeability characteristics and electrolyte wetting characteristics at the portion of the separator that is not pressed directly in the resultant electrode assembly.

According to an embodiment of the present disclosure, the pattern directly facing the electrode may have an area of 1-99% based on the total surface area of the surface-patterned roller. When the pattern directly facing the electrode satisfies the abovedefined range, it is possible to reduce the pressurized area and to minimize the physical stimulation applied to the electrode and the separator.

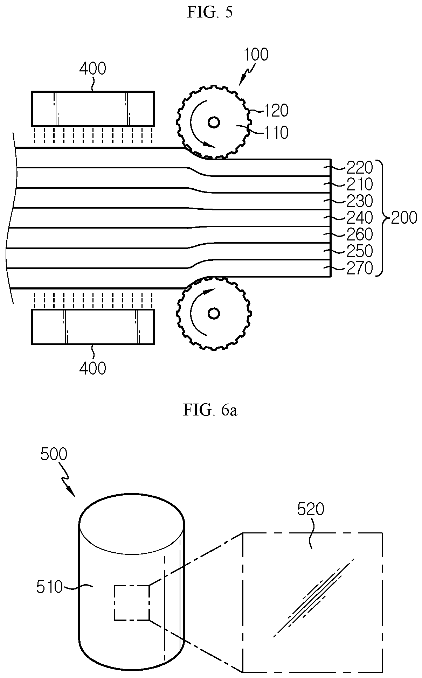

FIG. 5 illustrate a process including heat treating a plurality of electrodes and the first separator interposed between the electrodes, and allowing the heat treated first separator and electrodes through a pair of surface-patterned roller under pressurization to prepare a preliminary electrode assembly including the first separator laminated with the electrodes. A positive electrode having positive electrode active material layers 220, 230 formed on both surfaces of a positive electrode current collector 210 and a negative electrode having negative electrode active material layers 320, 330 formed on both surfaces of a negative electrode current collector 310 are allowed to path through a heating source 400 with a separator 240 interposed between both electrodes, and then the heat treated separator and electrodes are passed trough a pair of rollers 100 having a pattern 120 formed on the surface of a roller main body 110 under pressurization to obtain a preliminary electrode assembly 200.

Herein, the heat treatment may be carried out at a temperature of 25-100°C for a time of 0.01-10 seconds by using a heater.

In addition, the pressurization condition (pressure, time, or the like) in the process of pressurizing the heat treated separator and electrodes through a pair of rollers 100 having a pattern 120 formed on the surfaces thereof may be changed flexibly depending on the adhesion and air permeability requirements.

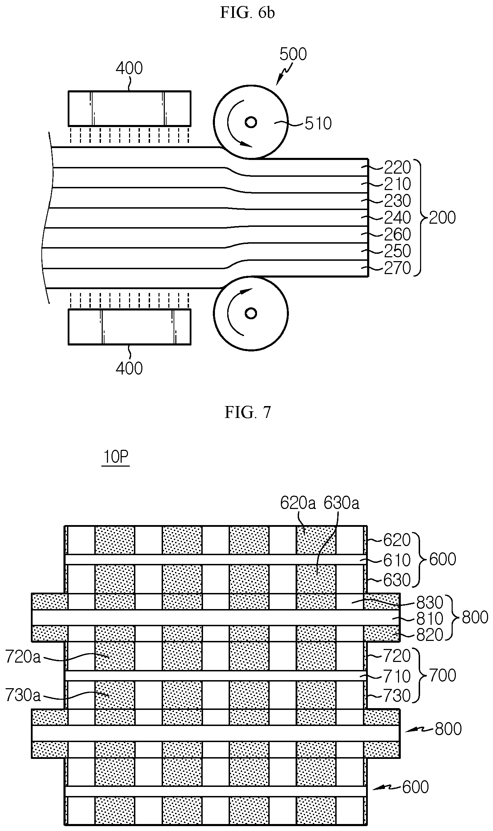

Meanwhile, FIG. 6a illustrates a conventional pressing roller, i.e. a roller 500 having a non-patterned flat surface 520 with no surface irregularities on the surface of a roller main body 510. FIG. 6b illustrates a process including heat treating a plurality of electrodes and first separator interposed between the electrodes, and allowing the heat treated first separator and electrodes through a pair of non-surface patterned roller under pressurization to prepare a preliminary electrode assembly including the first separator laminated with the electrodes.

FIG. 7 illustrates the preliminary electrode assembly 10P obtained by using a pair of surface-patterned rollers according to an embodiment of the present disclosure.

The preliminary electrode assembly 10P as shown in FIG. 7 includes a pair of first electrodes 600 provided with first electrode layers 620, 630 formed on both surfaces of a first electrode current collector 610, a second electrode 700 provided with second electrode layers 720, 730 formed on both surfaces of a second electrode current collector 710, and a separator 800 interposed between each of the first electrodes and the second electrode and having organic/inorganic porous coating layers formed on both surfaces of a porous polymer substrate 810. Herein, the porous coating layer of the separator of the preliminary electrode assembly 10P of FIG. 7 may be divided into a contact zone 820 that is in direct contact with the patterned part of the roller during the pressing and a non-contact zone 830 that is not in direct contact with the patterned part but faces the non-patterned part. Herein, the non-contact zone 830 that is not in direct contact with the patterned part is subjected to a relatively low level of pressing strength (lamination strength), as compared to the contact zone 820, and thus becomes less dense. As a result, when applying the resultant preliminary electrode assembly to an electrochemical device, an electrolyte may be introduced into the separator with ease through the less dense non-contact zone 830 of the separator, resulting in significant improvement of electrolyte wettability of the electrode assembly. In addition, it is possible to minimize an increase in air permeation time (Gurley number) of the separator, and thus to improve the performance of the electrochemical device. Herein, during the pressing, a zone that is in direct contact with the patterned part of the roller, a contact zone 620a, 630a of the first electrode layer 620, 630 corresponding to the lower zone thereof, and a contact zone 720a, 730a of the second electrode layer 720, 730 may also be formed in the first electrode layer 620, 630 and the second electrode layer 720, 730 at the positions corresponding to the contact zone 820 and the non-contact zone 830 of the separator.

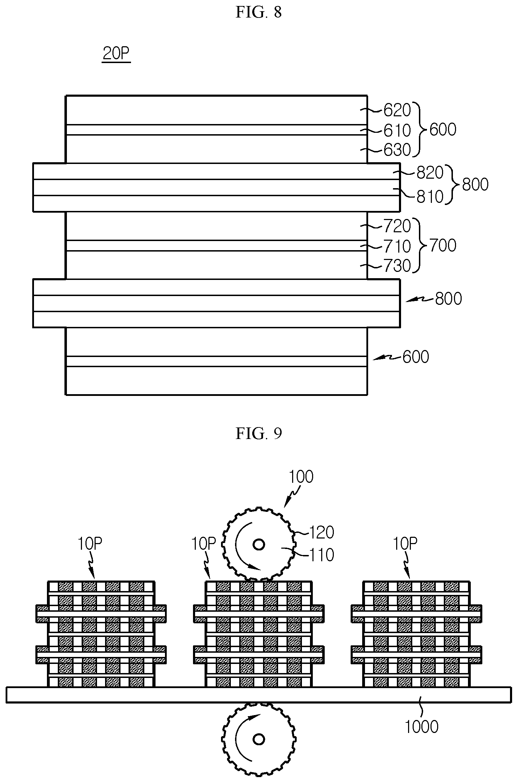

On the contrary, FIG. 8 illustrates the preliminary electrode assembly 20P obtained by using the conventional non-patterned roller. Referring to FIG. 8, the porous coating layer of the separator merely includes a contact zone 820 that is in direct contact with the patterned part of the roller during the pressing, and any non-contact zone that is not in direct contact with the patterned part cannot be present.

According to an embodiment of the present disclosure, a plurality of preliminary electrode assemblies may be disposed on one surface of a second separator, while allowing the preliminary electrode assemblies to be spaced apart from one another, the second separator on which the preliminary electrode assemblies are disposed may be passed through a pair of surface-patterned rollers under pressurization, and then winding may be carried out in such a manner that the second separator may be interposed between the preliminary electrode assemblies.

Referring to FIG. 9 and FIG. 10, the preliminary electrode assemblies disposed on one surface of a second separator 1000 may be preliminary electrode assemblies 10P obtained by using a pair of surface-patterned rollers, or preliminary electrode assemblies 20P obtained by using a pair of non-surface patterned rollers.

In addition, the preliminary electrode assemblies disposed on one surface of a second separator 1000 may be subjected to pressurization conditions (pressure, time, or the like) changed flexibly depending on the adhesion and air permeability requirements in the pressurization process using a pair of surface-patterned rollers.

When the electrode assembly is finished as described above, it is received in a casing and sealed by using a conventional method to provide an electrochemical device. Preferably, the electrochemical device may be a lithium secondary battery.

**[Description of Main Elements]**

| | | | |
|---|---|---|---|
| 10, 20, 30: Electrode assembly | 3a, 3b, 33c: First separator | | |
| 1a, 1b, 1c, 2050: Negative electrode | 5a, 5b, 5c, 2010: Positive electrode | | |
| 7a, 7b, 7c1, 7c2, 1100, 1200, 1300, 1400, 1500: Unit cell | | | |
| 3a, 3b, 3c, 2030: First separator | 7a, 7b: Full cell | | |
| 7c1, 7c2, 2100, 2200, 2300, 2400, 2500: Bi-cell | | | |
| 9a, 9b, 9c, 1000, 1090: Second separator | | | |
| 100, 500: Roller | 110, 510: Roller main body | 120: Pattern | 520: Surface |
| 210: Positive electrode current collector | | | |
| 220, 230: Positive electrode active material layer | | | |
| 310: Negative electrode current collector | | | |
| 320, 330: Negative electrode active material layer | | 240: Separator | |
| 10P, 20P, 200: Preliminary electrode assembly | | | |
| 610: First electrode current collector | | | |
| 620, 630: First electrode layer | 600: First electrode | | |
| 710: Second electrode current collector | | | |
| 720, 730: Second electrode layer | | 700: Second electrode | |
| 810: Porous polymer substrate | | 800: Organic/inorganic porous coating layer | |
| 800: Separator | 820: Contact zone | 830: Non-contact zone | |

## Claims

1. A method for manufacturing an electrode assembly, comprising the steps of:
heat treating a plurality of electrodes and a first separator interposed between the electrodes;
passing the heat treated first separator and electrodes through a pair of surface-patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
carrying out winding in such a manner that the second separator may be interposed between the preliminary electrode assemblies.

2. A method for manufacturing an electrode assembly, comprising the steps of:
heat treating a plurality of electrodes and a first separator interposed between the electrodes;
passing the heat treated first separator and electrodes through a pair of non-surface patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
passing the second separator on which the preliminary electrode assemblies are disposed through a pair of surface-patterned rollers under pressurization, and then carrying out winding in such a manner that the second separator may be interposed between the preliminary electrode assemblies.

3. A method for manufacturing an electrode assembly, comprising the steps of:
heat treating a plurality of electrodes and a first separator interposed between the electrodes;
passing the heat treated first separator and electrodes through a pair of surface-patterned rollers under pressurization to prepare a preliminary electrode assembly including the first separator laminated with the electrodes;
disposing a plurality of the preliminary electrode assemblies on one surface of a second separator, while allowing the preliminary electrode assemblies to be spaced apart from one another; and
passing the second separator on which the preliminary electrode assemblies are disposed through a pair of surface-patterned rollers under pressurization, and then carrying out winding in such a manner that the second separator may be interposed between the preliminary electrode assemblies.

4. The method for manufacturing an electrode assembly according to any one of claims 1 to 3, wherein the surface-patterned rollers are formed by carving a pattern on the roller surfaces, or by attaching a pattern sheet to the roller surfaces.

5. The method for manufacturing an electrode assembly according to any one of claims 1 to 3, wherein the pattern comprises a hexagonal pattern, a quadrangular pattern, a triangular pattern, a circular type, a pentagonal pattern, a linear pattern, a diagonal pattern, a polygonal pattern, or two or more of them.

6. The method for manufacturing an electrode assembly according to any one of claims 1 to 3, wherein the area of the pattern directly facing the electrode is 1-99% based on the total surface area of the surface-patterned roller.

7. An electrode assembly obtained by the method as defined in any one claims 1 to 3.

8. An electrochemical device comprising the electrode assembly as defined in claim 7, received in a casing.

9. The electrochemical device according to claim 8, which is a lithium secondary battery.
